# EUROPÄISCHE PATENTSCHRIFT

(11) **EP 3 676 069 B1**
(45) Veröffentlichungstag und Bekanntmachung des Hinweises auf die Patenterteilung: **01.10.2025**
(21) Anmeldenummer: 18759316.5
(22) Anmeldetag: 24.08.2018
(51) Int. Cl.: B29C 45/14, B60K 15/03, B60K 15/04, B29L 31/00

(54) **SPRITZGUSSVERFAHREN UND FLÜSSIGKEITSBEHÄLTER FÜR EIN KRAFTFAHRZEUG**
INJECTION MOLDING METHOD AND LIQUID CONTAINER FOR A MOTOR VEHICLE
PROCÉDÉ DE MOULAGE PAR INJECTION ET RÉSERVOIR DE LIQUIDE POUR UN VÉHICULE AUTOMOBILE

(30) Priorität: 28.08.2017 DE 102017119706
(43) Veröffentlichungstag der Anmeldung: 08.07.2020
(73) Patentinhaber: Kautex Textron GmbH & Co. KG, 53229 Bonn (DE)
(72) Erfinder: BOUFFIER, Roman, 53639 Königswinter (DE); WOLF, Hartmut, 53639 Königswinter (DE); KOPIEC, Christian, 53842 Troisdorf (DE); GEBERT, Klaus, 47877 Willich (DE); ROSENSTRÄTER, Sebastian Stefan, 50679 Köln (DE); SIGGIA, Fabian, 51143 Köln (DE); HÜTZEN, Markus, 53757 Sankt Augustin (DE)
(74) Vertreter: Richly & Ritschel Patentanwälte PartG mbB
(86) Internationale Anmeldenummer: PCT/EP2018/072927
(87) Internationale Veröffentlichungsnummer: WO 2019/042900

(56) Entgegenhaltungen:
- EP-A2- 0 930 190
- WO-A1-2009/000362
- US-A- 5 344 038
- US-A1- 2002 121 517
- US-A1- 2002 172 788
- US-A1- 2006 151 505

## Beschreibung

Die vorliegende Erfindung betrifft ein Spritzgussverfahren zum Herstellen einer Halbschale eines Flüssigkeitsbehälters für ein Kraftfahrzeug sowie einen Flüssigkeitsbehälter für ein Kraftfahrzeug.

In modernen Kraftfahrzeugen werden eine Vielzahl von Betriebsflüssigkeiten mitgeführt, die jeweils in einem Flüssigkeitsbehälter für ein Kraftfahrzeug aufgenommen sind. Beispielsweise dienen Kunststoffkraftstoffbehälter zur Bevorratung von Kraftstoff für einen Verbrennungsmotor.

Derartige Kunststoffkraftstoffbehälter sollen idealerweise leicht, crashsicher und emissionsarm sein. Bezüglich der Emission müssen insbesondere die strenger werdenden gesetzlichen Grenzwerte der maximal zulässigen Kraftstoffverdunstungsemissionen von Kohlenwasserstoffen in die Umwelt eingehalten werden. Dies erfordert insbesondere die Vermeidung von Kraftstoffleckagen unter allen Betriebsbedingungen, wie z.B. bei der Betankung, inklusive der Betankungsentlüftung, bei der Betriebsentlüftung, also der Kraftstoffausgasung bei einem Temperaturanstieg eines Tanksystems, sowie die Minimierung von Diffusion der Kohlenwasserstoffe durch die Behälterwandung.

Um die Diffusion durch die Behälterwandung gering zu halten, weisen Kraftstoffbehälter häufig einen mehrschichtigen Wandungsaufbau auf, der eine Diffusionsbarriere, Haftvermittler und Deckschichten umfasst. Dabei wird eine Barriereschicht meist zweiseitig von zwei Haftvermittlerschichten eingefasst, die ihrerseits wiederum von jeweils einer Deckschicht bedeckt sind. So ergibt sich ein beispielsweise fünfschichtiger Wandungsaufbau, mit einer Barriereschicht aus EVOH, zwei Haftvermittlerschichten aus LDPE und zwei Deckschichten aus HDPE.

Sofern ein solcher Flüssigkeitsbehälter mit einer Barriereschicht im Spritzgussverfahren hergestellt wird, ist die Barriereschicht im Bereich von im Spritzguss geformten Anschlusselementen, wie einem Einfüllstutzen, einem Entlüftungsstutzen oder dergleichen, durchbrochen. Durch das Durchbrechen der Barriereschicht sind im Bereich derartiger Anschlusselemente Permeationspfade gebildet, entlang derer es im Betrieb zu einer erhöhten Emission ausdiffundierender Kohlenwasserstoffe kommt.

In diesem Zusammenhang ist aus dem Dokument WO 2009/000362 A 1 ein Kraftstoffbehälter aus thermoplastischem Kunststoff mit wenigstens einer umlaufenden Naht bekannt, mit einer Einfüllöffnung, mit Mitteln zur Be- und Entlüftung und mit Mitteln zur Förderung und Entnahme von Kraftstoff in Form wenigstens einer innerhalb des Kraftstoffbehälters angeordneten Kraftstofffördereinheit. Mit Ausnahme der Einfüllöffnung sind bei dem Kraftstoffbehälter keine Öffnungen oder Durchbrüche in der Behälterwandung vorgesehen, die wesentlich größer sind als der Durchmesser der hindurchzuführenden Leitung, vielmehr durchsetzen die aus dem Kraftstoffbehälter hinaus oder in diesen hinein geführten Fluidleitungen und/oder elektrischen Leitungen die Naht des Kraftstoffbehälters sich in einem Winkel zum Verlauf der Naht erstreckend und/oder sind teilweise durch die Einfüllöffnung und ggf. einen sich an die Einfüllöffnung anschließenden Einfüllstutzen geführt.

Außerdem ist aus der US 2002/121517 A1 eine Schweißverbindung für einen Kraftstofftank bekannt, welche die Menge an Kraftstoffdampf im Kraftstofftank, die in die Atmosphäre entweicht, reduziert. Die Kraftstofftank-Schweißverbindung umfasst einen Verbindungs-Hauptkörper und eine Sperrschicht, die auf eine Oberfläche des Verbindungs-Hauptkörpers laminiert ist. Der Verbindungshauptkörper ist aus einem ersten Harzmaterial gebildet, das mit der Wand des Kraftstofftanks verschweißt werden kann, und die Sperrschicht ist aus einem zweiten Harzmaterial gebildet, das adhäsiv und chemisch mit dem ersten Harzmaterial reagiert und das kraftstoffundurchlässiger ist als das erste Harzmaterial.

Das Dokument EP O 930 190 A2 betrifft einen Behälter aus einem Spritzgussmaterial, in dem ein Dichtungsabschnitt im Wesentlichen in der Mitte einer Öffnung ausgebildet ist. An der Öffnung überlappen sich ein Einlassschlauch und ein Teilbefestigungsabschnitt einer Harzschicht. Eine Gassperrschicht erstreckt sich in einen Bereich, der weiter in Richtung einer Außenseite des Behälters liegt als der Dichtungsabschnitt.

Vor diesem Hintergrund liegt der Erfindung die technische Problemstellung zugrunde, ein Spritzgussverfahren zum Herstellen einer Halbschale eines Flüssigkeitsbehälters für ein Kraftfahrzeug sowie einen Flüssigkeitsbehälter für ein Kraftfahrzeug anzugeben, welche die voranstehend genannten Nachteile nicht oder zumindest in geringerem Maße aufweisen, und insbesondere eine reduzierte diffusionsbedingte Emission ermöglichen.

Die voranstehend beschriebene technische Problemstellung wird gelöst durch ein Spitzgussverfahren nach Anspruch 1 und einen Flüssigkeitsbehälter nach Anspruch 7. Weitere Ausgestaltungen der Erfindung ergeben sich aus den abhängigen Ansprüchen und der nachstehenden Beschreibung.

Gemäß einem ersten Aspekt betrifft die Erfindung ein Spritzgussverfahren zum Herstellen einer Halbschale eines Flüssigkeitsbehälters für ein Kraftfahrzeug, mit den Verfahrensschritten:
- Bereitstellen einer Barrierefolie in einer Kavität eines Spritzgusswerkzeugs, wobei die Kavität zur Formgebung der Halbschale vorgesehen ist;
- Bereitstellen einer Barrierehülse in der Kavität;
- Einspritzen von plastifiziertem Spritzgusswerkstoff in die Kavität,
   - wobei plastifizierter Spritzgusswerkstoff auf die Barrierefolie aufgespritzt wird und/oder die Barrierefolie mit plastifiziertem Spritzgusswerkstoff hinterspritzt wird; und
   - wobei die Barrierehülse unter Ausbildung eines Anschlusselements der Halbschale, insbesondere eines Stutzens, mit plastifiziertem Spritzgusswerkstoff hinterspritzt wird und/oder mit plastifiziertem Spritzgusswerkstoff umspritzt wird.

Durch die Einbindung der Barrierehülse im Bereich des Anschlusselements kann die diffusionsbedingte Emission reduziert werden.

Bei dem Anschlusselement kann es sich um einen Stutzen handeln. Der Stutzen kann zum Anschluss eines Schlauchs oder eines Rohrs ausgebildet sein. Der Stutzen kann eine umlaufende Fase oder einen umlaufenden Steg als Halteelement zum Befestigen eines Schlauchs haben. Der Stutzen kann ein umlaufendes Tannenbaumprofil zum Halten eines Schlauchs haben. Der Stutzen kann eine kreisrund umlaufende Auswölbung zum Halten eines Schlauchs haben. Alternativ oder ergänzend kann wenigstens ein Anschlusselement vorgesehen sein, dass zur Durchführung elektrischer Leitungen vorgesehen ist.

Nach einer weiteren Ausgestaltung ist das Spritzgussverfahren gekennzeichnet durch das Bereitstellen einer Barrierehülse in der Kavität, mit den Verfahrensschritten: Einsetzen der Barrierehülse in eine Ausnehmung zur Formgebung des Anschlusselements; und/oder Aufschieben der Barrierehülse auf einen Dorn des Spitzgusswerkzeugs.

Die Barrierehülse kann demnach formschlüssig in einem Spritzgusswerkzeug gehalten sein, wobei ein Dorn oder eine Ausnehmung zum Halten der Barrierehülse an einer Formhälfte eines Spritzgusswerkzeugs vorgesehen sein können. So kann die Barrierehülse zuverlässig und wiederholgenau in einem Spritzgusswerkzeug positioniert werden. Die Barrierehülse kann über ein Vakuum oder elektrostatisch an dem Spritzgusswerkzeug gehalten sein.

Gemäß einer weiteren Ausgestaltung ist das Spritzgussverfahren gekennzeichnet durch das Bereitstellen der Barrierefolie und der Barrierehülse derart, dass eine Längsachse einer Durchgangsöffnung der Barrierehülse quer zu einer Außenfläche oder Innenfläche der Barrierefolie orientiert ist und/oder dass die Barrierefolie an der Barrierehülse anliegt.

Die Längsachse der Durchgangsöffnung der Barrierehülse kann insbesondere senkrecht zu einer Außenfläche oder Innenfläche der Barrierefolie orientiert sein.

Die Barrierefolie kann derart an der Barrierehülse anliegen, dass die Barrierefolie bündig oder überlappend, insbesondere spaltfrei an der Barrierehülse anliegt. Die Barrierehülse ergänzt damit die Barrierewirkung der Barrierefolie im Bereich des Anschlusselements.

Nach einer weiteren Ausgestaltung ist das Spritzgussverfahren gekennzeichnet durch das Bereitstellen der Barrierefolie und der Barrierehülse derart, dass eine Durchgangsöffnung der Barrierefolie zumindest abschnittweise fluchtend mit einer Durchgangsöffnung der Barrierehülse angeordnet ist und/oder dass eine Durchgangsöffnung der Barrierefolie und eine Durchgangsöffnung der Barrierehülse koaxial angeordnet sind.

Es kann beispielsweise eine Barrierefolie bereitgestellt werden, die an einer oder mehreren Stellen gelocht ist, d.h. eine oder mehrere Durchgangsöffnungen aufweist. Jeder Durchgangsöffnung der Barrierefolie kann eine Barrierehülse eines Anschlusselements zugeordnet sein, um eine Verringerung der diffusionsbedingten Emission eines jeweiligen Anschlusselements zu erreichen.

Gemäß einer weiteren Ausgestaltung ist das Spritzgussverfahren gekennzeichnet durch das Bereitstellen der Barrierefolie und der Barrierehülse derart, dass die Barrierehülse zumindest abschnittweise in einer Durchgangsöffnung der Barrierefolie sitzt. Die Barrierehülse kann in Bereich einer Teillänge umfangsseitig vollständig von der Barrierefolie eingefasst sein. Die Barrierefolie kann insbesondere spaltfrei an einer äußeren Mantelfläche der Barrierehülse anliegen.

Gemäß einer weiteren Ausgestaltung des Spritzgussverfahren erfolgt ein stoffschlüssiges Verbinden der Barrierehülse und der Barrierefolie. Die stoffschlüssige Verbindung kann z.B. während des Spritzgussverfahrens infolge eines Drucks und eines Temperaturanstiegs erfolgen, der aus dem Einspritzen des plastifizierten Spritzgusswerkstoffs resultiert. Alternativ kann vorgesehen sein, dass die Barrierehülse vor Einspritzen von plastifiziertem Spritzgusswerkstoff in die Kavität stoffschlüssig mit der Barrierefolie verbunden worden ist.

Die Barrierehülse und die Barrierefolie können zumindest abschnittweise im Bereich einer Überlappung stoffschlüssig miteinander verbunden sein. Insbesondere können die Barrierehülse und die Barrierefolie zumindest abschnittsweise miteinander verschweißt sein oder miteinander verklebt sein. Auf diese Weise kann die Barrierewirkung im Bereich einer Nahtstelle zwischen der Barrierefolie und der Barrierehülse verbessert werden.

Alterativ oder ergänzend kann ein stoffschlüssiges Verbinden des Spritzgusswerkstoffs mit der Barrierehülse und/oder der Barrierefolie erfolgen.

Die Barrierehülse und die Barrierefolie können stoffschlüssig miteinander und zusätzlich jeweils stoffschlüssig mit dem Spritzgusswerkstoff verbunden werden. Die Verbindungen können im Wesentlichen gleichzeitig durch das Einbringen des plastifizierten Spritzgusswerkstoffs in das Spritzgusswerkzeug und die damit einhergehende Druckaufbringung und den Wärmeeintrag erfolgen.

Es kann vorgesehen sein, dass die Barrierehülse vor dem Einbringen in ein Spritzgusswerkzeug mit der Barrierefolie verbunden wird, insbesondere verklebt oder verschweißt wird.

Gemäß einem zweiten Aspekt betrifft die Erfindung einen Flüssigkeitsbehälter für ein Kraftfahrzeug, mit zwei miteinander verbundenen Halbschalen, die ein Vorratsvolumen zur Aufnahme einer Flüssigkeit begrenzen, wobei wenigstens eine der Halbschalen eine Barrierefolie als Diffusionsbarriere hat und ein Anschlusselement, insbesondere einen Stutzen, zum Anschließen eines Schlauchs oder Rohrs aufweist, wobei dem Anschlusselement wenigstens eine Barrierehülse zugeordnet ist, die eine Diffusionsbarriere im Bereich des Anschlusselements bildet.

Durch die Einbindung der Barrierehülse im Bereich des Anschlusselements kann die diffusionsbedingte Emission reduziert werden. Die Barrierehülse kann integraler Bestandteil einer Behälterwandung der Halbschale sein und insbesondere stoffschlüssig mit einem Trägerwerkstoff der Halbschale verbunden sein.

Die Barrierehülse und/oder die Barrierefolie können artgleich mit einem Werkstoff der Halbschale verbunden sein. Beispielsweise können die Barrierehülse und/oder die Barrierefolie eine Barriereschicht einfassende Deckschichten aus HDPE haben, wobei eine Deckschicht mit einem aus HDPE bestehenden Trägerwerkstoff der Halbschale stoffschlüssig verbunden ist.

Die Barrierehülse kann, je nach Wandungsstärke und Werkstoff, flexibel bzw. biegeschlaff sein oder eine in sich steife Struktur aufweisen.

Die Barrierehülse kann ein Inlay sein, dass zum Einlegen in eine Ausnehmung einer Spritzgussform oder zum Aufschieben auf einen Dorn einer Spritzgussform vorgesehen ist.

Insbesondere kann wenigstens eine Halbschale mit einem voranstehend beschriebenen, erfindungsgemäßen Verfahren hergestellt worden sein.

Bei dem Anschlusselement kann es sich um einen Stutzen handeln. Der Stutzen kann zum Anschluss eines Schlauchs oder eines Rohrs ausgebildet sein. Der Stutzen kann eine umlaufende Fase oder einen umlaufenden Steg als Halteelement zum Befestigen eines Schlauchs haben. Der Stutzen kann ein umlaufendes Tannenbaumprofil zum Halten eines Schlauchs haben. Der Stutzen kann eine kreisrund umlaufende Auswölbung zum Halten eines Schlauchs oder eines Rohrs haben. Alternativ oder ergänzend kann wenigstens ein Anschlusselement vorgesehen sein, dass zur Durchführung elektrischer Leitungen vorgesehen ist.

Nach einer weiteren Ausgestaltung des Flüssigkeitsbehälters ist vorgesehen, dass eine Längsachse einer Durchgangsöffnung der Hülse quer zu einer Außenfläche oder Innenfläche der Barrierefolie orientiert ist.

Die Längsachse der Durchgangsöffnung der Barrierehülse kann insbesondere senkrecht zu einer Außenfläche oder Innenfläche der Barrierefolie orientiert sein.

Die Barrierefolie kann derart an der Barrierehülse anliegen, dass die Barrierefolie bündig, insbesondere spaltfrei an der Barrierehülse anliegt. Die Barrierehülse ergänzt damit die Barrierewirkung der Barrierefolie im Bereich des Anschlusselements.

Gemäß einer weiteren Ausgestaltung des Flüssigkeitsbehälters ist vorgesehen, dass eine Durchgangsöffnung der Barrierefolie zumindest abschnittweise fluchtend mit einer Durchgangsöffnung der Barrierehülse angeordnet ist. Alternativ oder ergänzend können eine Durchgangsöffnung der Barrierefolie und eine Durchgangsöffnung der Barrierehülse koaxial angeordnet sein.

Erfindungsemäß sitzt die Barrierehülse zumindest abschnittweise in einer Durchgangsöffnung der Barrierefolie.

Die Barrierehülse kann in Bereich einer Teillänge umfangsseitig vollständig von der Barrierefolie eingefasst sein. Die Barrierefolie kann insbesondere spaltfrei an einer äußeren Mantelfläche der Barrierehülse anliegen.

Die Barrierehülse und die Barrierefolie können zumindest abschnittweise stoffschlüssig miteinander verbunden sein. Insbesondere können die Barrierehülse und die Barrierefolie zumindest abschnittsweise miteinander verschweißt sein oder miteinander verklebt sein. Auf diese Weise kann die Barrierewirkung im Bereich einer Nahtstelle zwischen der Barrierefolie und der Barrierehülse verbessert werden.

Nach einer weiteren Ausgestaltung des Flüssigkeitsbehälters ist vorgesehen, dass die Barrierefolie und/oder die Barrierehülse ein Monolayer, d.h. einschichtig ist. Alternativ oder ergänzend können die Barrierefolie und/oder die Barrierehülse mehrschichtig sein. Alternativ oder ergänzend kann die Barrierefolie gelocht sein.

Die Barrierefolie und/oder die Barrierehülse können z.B. eine Barriereschicht aus EVOH (Ethylen-Vinylalkohol-Copolymer), zwei Haftvermittlerschichten aus LDPE (Low Density Polyethylen) und zwei Deckschichten aus HDPE (High Density Polyethylene) aufweisen.

Der Spritzgusswerkstoff kann eine einlagige oder mehrlagige Trägerschicht bilden, die einen oder mehrere der folgenden Werkstoffe aufweisen oder aus einem oder mehreren der folgenden Werkstoffe bestehen kann: Elastomer, thermoplastisches Elastomer, HDPE (High-density polyethylene), faserverstärktes Polyamid, PA (Polyamid), teilaromatisches Polyamid, schlagzähes Polyamid.

Die einlagige oder mehrlagige Barriereschicht kann einen oder mehrere der folgenden Werkstoffe aufweisen oder aus einem oder mehreren der folgenden Werkstoffe bestehen: EVOH (Ethylen-Vinylalkohol-Copolymer), LDPE (Low-density polyethylene), PEEK (Polyetheretherketon), PA (Polyamid), teilaromatisches Polyamid, HDPE (High-density polyethylene), Fluorpolymer. Z.B. kann die Barriereschicht dreilagig aus PA und EVOH aufgebaut sein, wobei eine zentrale EVOH Lage zweiseitig von PA-Deckschichten bedeckt bzw. eingefasst ist. Es können auch ein beispielsweise sechslagiger Wandungsaufbau oder ein fünflagiger Aufbau aus HDPE, LDPE und EVOH vorgesehen sein, wobei eine zentrale Schicht aus EVOH zweiseitig von jeweils einer LDPE Schicht bedeckt ist, und wobei die LDPE-Schichten ihrerseits wiederum von HDPE-Schichten bedeckt sind.

Es kann beispielsweise eine Barrierefolie bereitgestellt werden, die an einer oder mehreren Stellen gelocht ist, d.h. eine oder mehrere Durchgangsöffnungen aufweist. Jeder Durchgangsöffnung der Barrierefolie kann eine Barrierehülse eines Anschlusselements zugeordnet sein, um eine Verringerung der diffusionsbedingten Emission eines jeweiligen Anschlusselements zu erreichen.

Gemäß einer weiteren Ausgestaltung des Flüssigkeitsbehälters ist vorgesehen, dass eine Durchgangsöffnung des Anschlusselements einen gekrümmten Verlauf aufweist oder einen Knick hat, wobei das Anschlusselement insbesondere ein 45°-Anschluss, einen 60°-Anschluss oder einen 90°-Anschluss bildet. Die Barrierehülse kann an die Form des Anschlusses angepasst sein, um eine zuverlässige Barrierewirkung bereitzustellen. Es kann vorgesehen sein, dass ein Anschluss mit einer Neigung zwischen 0° und 90° vorgesehen ist, wobei die Neigung ohne Ausbildung eines Sprungs oder Knicks als Freiformfläche sprungfrei gekrümmt sein kann.

Nach einer weiteren Ausgestaltung des Flüssigkeitsbehälters ist vorgesehen, dass die Barrierefolie und die Barrierehülse zumindest abschnittsweise überlappend angeordnet sind, wobei insbesondere die Barrierehülse und/oder die Barrierefolie eine Auftulpung aufweisen oder zumindest abschnittweise trichterförmig sind. Durch die Überlappung kann eine Verringerung der diffusionsbedingten Emission im Bereich eines Übergangs oder einer Nahtstelle zwischen der Barrierefolie und der Barrierehülse erreicht werden.

Nach einer weiteren Ausgestaltung des Flüssigkeitsbehälters ist vorgesehen, dass die Barrierefolie und die Barrierehülse stoffschlüssig miteinander verbunden sind.

Die Barrierehülse und die Barrierefolie können z.B. im Bereich einer Überlappung stoffschlüssig miteinander verbunden sein, insbesondere miteinander verschweißt oder verklebt sein.

Alternativ oder ergänzend können die Barrierehülse und/oder die Barrierefolie stoffschlüssig mit einem Spritzgusswerkstoff der Halbschale verbunden sein. Der Spritzgusswerkstoff kann insbesondere ein strukturgebender Trägerwerkstoff sein, mit dem die Barrierefolie und/oder die Barrierehülse stoffschlüssig verbunden sind. So kann eine zuverlässige, nicht zerstörungsfrei lösbare Einbindung der Barrierehülse und/oder der Barrierefolie in den Flüssigkeitsbehälter erfolgen.

Die Barrierefolie und/oder die Barrierehülse können eine Wanddicke in einem Bereich von 100 µm bis 1000 µm haben.

Die Halbschalen des Flüssigkeitsbehälters können entlang aneinander anliegender Ränder stoffschlüssig miteinander verbunden sein, insbesondere miteinander verschweißt sein. Es kann vorgesehen sein, dass beide Halbschalen eine Barrierefolie mit wenigstens einer Barrierehülse haben. Es kann vorgesehen sein, dass beide Halbschalen eine Barrierefolie haben, jedoch nur eine Halbschale eines oder mehrere Anschlusselemente mit jeweils zugeordneten Barrierehülsen hat, während die andere Halbschale keine Anschlusselemente aufweist.

Die Barrierehülse kann durch Extrusion eines Schlauchmaterials ein- oder mehrschichtig hergestellt sein. Auf diese Weise ergibt sich eine umfangsseitig nahtlose Wandung mit homogenen Bauteileigenschaften, z.B. hinsichtlich der Festigkeit und Barrierewirkung. Um einen mehrlagigen Aufbau zu erreichen, können Schlauchfolien gefaltet als Rohmaterial bereitgestellt werden.

Die Barrierehülse kann aus einem ein- oder mehrschichtigen Band-, Folien oder Plattenmaterial hergestellt sein, das in Hülsenform gebogen und entlang einer Stoßkante längsseitig verschweißt worden ist. Die Hülse weist in diesem Fall eine Längsnaht auf.

Es kann vorgesehen sein, dass das Verhältnis einer Breite bzw. Wandungsdicke b1 des Anschlusselements im Bereich eines Permeationspfads zu einer Länge L1 des Permeationspfads kleiner oder gleich 0,5 ist (b1/1L1 ≤ 0,5).

Nachfolgend wird die Erfindung anhand einer Ausführungsbeispiele darstellenden Zeichnung näher beschrieben. Es zeigen jeweils schematisch:
- Fig. 1: einen Querschnitt eines Anschlusselements eines Flüssigkeitsbehälters gemäß dem Stand der Technik;
- Fig. 2: einen weiteren Querschnitt eines Anschlusselements eines Flüssigkeitsbehälters gemäß dem Stand der Technik;
- Fig. 3: einen Querschnitt eines Anschlusselements eines erfindungsgemäßen Flüssigkeitsbehälters;
- Fig. 4: einen Querschnitt eines erfindungsgemäßen Flüssigkeitsbehälters;
- Fig. 5: eine Barrierehülse und eine Barrierefolie vor dem Spritzguss;
- Fig. 6: die Barrierehülse und die Barrierefolie aus Fig. 5 nach dem Spritzguss;
- Fig. 7 - Fig. 14: weitere alternative Querschnittsformen eines Anschlusselements eines erfindungsgemäßen Flüssigkeitsbehälters;
- Fig. 15: einen Ablauf eines erfindungsgemäßen Spritzgussverfahrens.

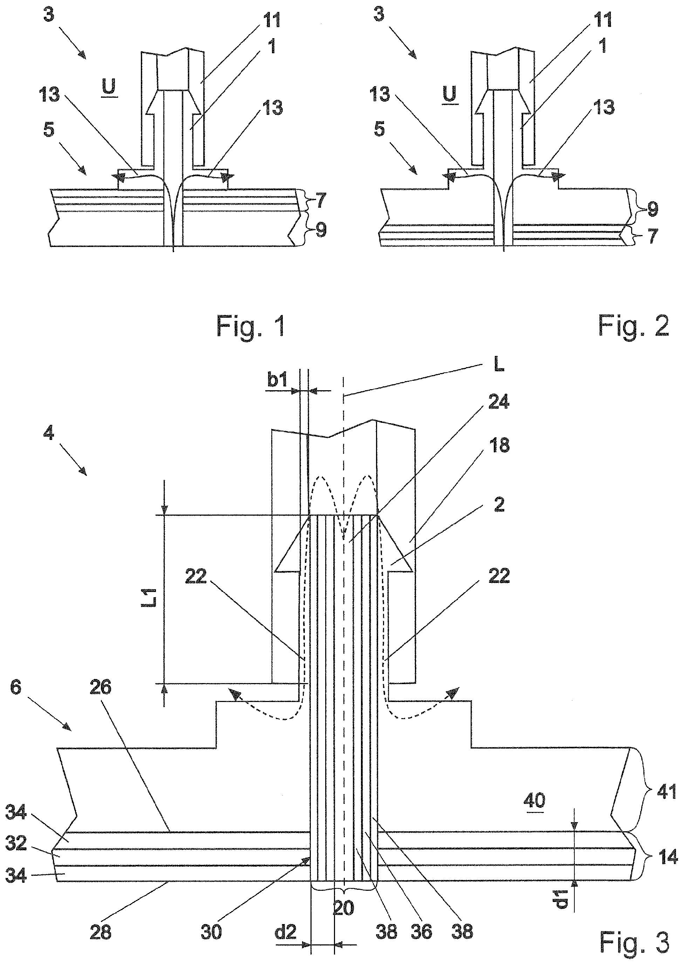

Die Figuren 1 und 2 zeigen jeweils einen Querschnitt eines Anschlusselements 1 eines Flüssigkeitsbehälters 3 gemäß dem Stand der Technik. Es ist lediglich ein Ausschnitt einer Wandung 5 des Flüssigkeitsbehälters 3 dargestellt. Die Wandung 5 des Flüssigkeitsbehälters 3 weist eine Barriereschicht 7 und eine Trägerschicht 9 auf. Das Anschlusselement 1 ist auf einer der Trägerschicht 9 abgewandten Seite der Barriereschicht 7 angeordnet (Variante gemäß Fig. 1) oder sitzt auf der Trägerschicht 9, bei innenliegender Barriereschicht (Variante gemäß Fig. 2. Auf das Anschlusselement 1 ist ein Schlauch 11 aufgeschoben, der beispielsweise Teil einer Entlüftung des Flüssigkeitsbehälters 3 ist.

Sofern Kraftstoff in dem Flüssigkeitsbehälter 3 bevorratet wird, kommt es zu einer erhöhten diffusionsbedingten Kraftstoffemission entlang von Permeationspfaden 13. Über die Permeationspfade 13 kann bevorrateter Kraftstoff ausdiffundieren, da Kunststoff der Trägerschicht 9 bzw. des Stutzens 1 entlang dieser Pfade nicht durch die Barriereschicht 7 gegenüber einer Umgebung U abgegrenzt wird. Entlang der Permeationspfade 13 findet daher z.B. eine nicht durch die Barriereschicht 7 begrenzte Kohlenwasserstoffdiffusion über den Kunststoff der Trägerschicht 9 bzw. des Anschlusselements 1 statt. Je größer die Anzahl der an einem Flüssigkeitsbehälter 3 vorgesehenen Anschlusselemente 1 ist, umso größer sind auch die Kraftstoffleckagen aufgrund diffusionsbedingter Kohlenwasserstoffemission oder Leckage in eine Umgebung U.

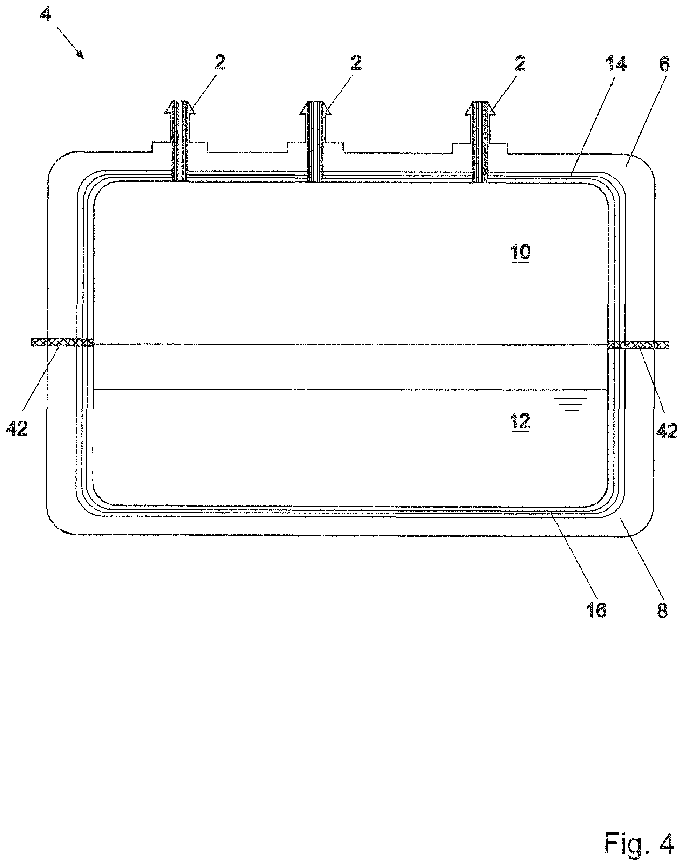

Fig. 3 zeigt einen Querschnitt eines Anschlusselements 2 eines erfindungsgemäßen Flüssigkeitsbehälters 4 (Fig. 4). Bei dem Flüssigkeitsbehälter 4 handelt es sich vorliegend um einen Kraftstoffbehälter 4 für ein Kraftfahrzeug.

Der Flüssigkeitsbehälter 4 hat zwei miteinander verbundene Halbschalen 6, 8. Die Halbschalen 6, 8 begrenzen ein Vorratsvolumen 10 zur Aufnahme einer Flüssigkeit 12. Bei der Flüssigkeit 12 handelt es sich vorliegend um Kraftstoff 12 für eine Verbrennungskraftmaschine eines Kraftfahrzeugs. Die Halbschalen 6, 8 haben jeweils eine mehrlagige Barrierefolie 14, 16 als Diffusionsbarriere.

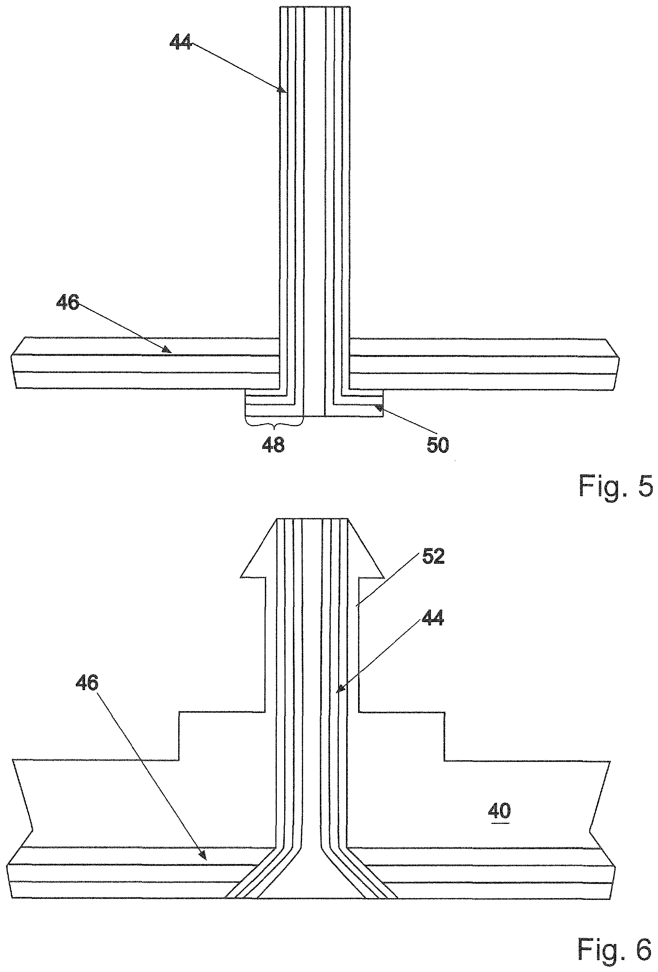

Die Halbschale 6 hat vorliegend drei Anschlusselemente 2. Es versteht sich, dass die Anordnung, Anzahl und Geometrie von an den Halbschalen 6, 8 vorgesehenen Anschlusselementen gemäß alternativer Ausführungsbeispiel variiert werden kann. So können an einer Halbschale 6, 8 alternativ oder ergänzend zu der in Fig. 4 gezeigten Anordnung weitere Anschlusselemente vorgesehen sein, wie z.B. in den Figuren 6 bis 14 dargestellt.

Bei den Anschlusselementen 2 handelt es sich vorliegend um Stutzen 2, die zum Anschließen eines Schlauchs 18 eingerichtet sind, wie in Fig. 3 exemplarisch dargestellt.

Wie Fig. 3 zu entnehmen, ist dem Anschlusselement 2 eine mehrschichtige Barrierehülse 20 zugeordnet. Die Barrierehülse 20 bildet vorliegend eine Diffusionsbarriere im Bereich des Anschlusselements 2. Zwar kann durch die Barrierehülse 20 eine diffusionsbedingte Kraftstoffemission nicht vollständig vermieden werden, wie durch die Permeationspfade 22 angedeutet. Jedoch wird in dem vorliegenden Beispiel durch die Verwendung der Barrierehülse 20 der freibleibende Querschnitt entlang eines Permeationspfads 22 im Vergleich zum Stand der Technik gemäß Fig. 1 und 2 verringert und zudem der Diffusionsweg im Vergleich zum Stand der Technik verlängert. Auf diese Weise kann die diffusionsbedingte Kraftstoffemission erheblich reduziert werden.

Die Barrierehülse 20 hat eine Längsachse L, entlang derer eine Durchgangsöffnung 24 erstreckt ist, wobei die Durchgangsöffnung 24 quer, vorliegend senkrecht, zu einer Außenfläche 26 und einer Innenfläche 28 der Barrierefolie 14 orientiert ist. Die Barrierehülse 20 sitzt in einer Durchgangsöffnung 30 der Barrierefolie 14 und die Durchgangsöffnung 30 ist ebenfalls entlang der Längsachse L erstreckt und damit koaxial zur Barrierehülse 20 angeordnet.

Die Barrierefolie 14 und die Barrierehülse 20 sind vorliegend mehrschichtig aufgebaut. Die Barrierefolie 14 hat eine Barriereschicht 32, die zweiseitig von Deckschichten 34 eingefasst ist. Die Barrierehülse 20 hat eine Barriereschicht 36, die zweiseitig von Deckschichten 38 eingefasst ist.

Die Barrierefolie 14 und die Barrierehülse 20 sind stoffschlüssig miteinander verbunden, vorliegend miteinander verschweißt. Die Barrierehülse 20 und die Barrierefolie 14 sind vorliegend zudem stoffschlüssig mit einem Spritzgusswerkstoff 40 einer strukturgebenden Trägerschicht 41 der Halbschale 6 verbunden. Bei dem Spritzgusswerkstoff 40 handelt es sich um einen thermoplastischen Kunststoff, vorliegend HDPE. Bei den Deckschichten 34, 36 handelt es sich ebenfalls um HDPE, so dass jeweils eine artgleiche Verschweißung vorliegt.

Die Barrierefolie 14 hat vorliegend eine Wanddicke d1 von ca. 700 µm. Die Barrierehülse 20 hat vorliegend eine Wanddicke d2 von ca. 500 µm.

Gemäß alternativer Ausführungsbeispiele kann vorgesehen sein, dass die Barrierehülse 20 und/oder die Barrierefolie 14 als Monolayer, das heißt einschichtig, ausgeführt sind. In diesem Fall dient der Monolayer sowohl zur stoffschlüssigen Anbindung der Barriereschicht an den Trägerwerkstoff 40 und hat zudem die Funktion einer Diffusionsbarriere für den bevorrateten Kraftstoff 12, insbesondere für Kohlenwasserstoffe.

Das Verhältnis einer Breite b1 bzw. Wandungsdicke b1 des Anschlusselements 2 im Bereich eines Permeationspfads 22 zu einer Länge L1 des Permeationspfads ist vorliegend kleiner 0,5 (b1/L1 < 0,5).

Wie Fig. 4 zu entnehmen ist, sind die beiden Halbschalen 6, 8 des Flüssigkeitsbehälters 4 in den Bereichen 42 miteinander verschweißt.

Fig. 5 zeigt eine mehrschichtige Barrierehülse 44 und eine mehrschichtige Barrierefolie 46, vor dem Aufspritzen bzw. Hinterspritzen mit Trägerwerkstoff 40. Die Barrierehülse 44 und die Barrierefolie 46 sind in einem Bereich 48 überlappend angeordnet. Die Barrierehülse 44 weist vorliegend einen kreisrund umlaufenden Kragen 50 auf.

Durch das Einspritzen von Spritzgusswerkstoff 40 in eine Spritzgussform (nicht dargestellt) werden die Barrierehülse 44 und die Barriereschicht 46 aufgrund des Druck- und Temperatureintrags überlappend miteinander verschweißt, wie der Fig. 6 zu entnehmen ist. Weiter entsteht auch eine stoffschlüssige Verbindung bzw. Verschweißung der Barrierehülse 44 und der Barriereschicht 46 mit dem Trägerwerkstoff 40.

Das in dieser Art gebildete Anschlusselement 52 hat demnach eine innenliegende Barrierehülse 44, wobei die Barrierefolie 46 ebenfalls innen liegend, d.h. einen zu bevorratenden Kraftstoff zugewandt, angeordnet ist.

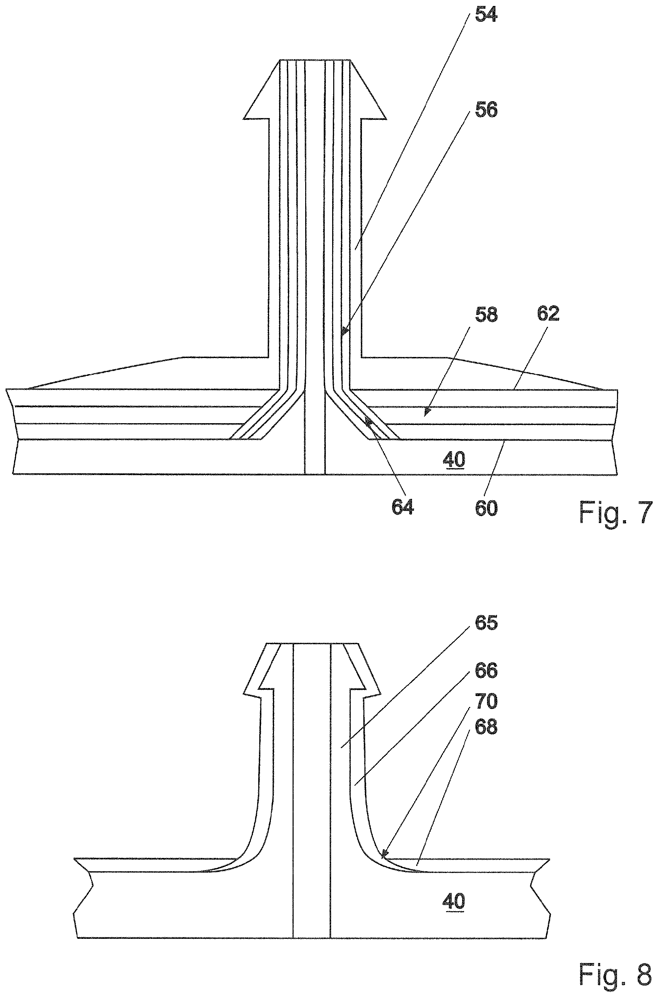

Fig. 7 zeigt eine weitere Variante eines Anschlusselements 54 mit einer innenliegenden Barrierehülse 56. In diesem Fall ist die eine Barrierefolie 58 im Vergleich zum Beispiel der Fig. 6 jedoch außenliegend an einer Halbschale eines Flüssigkeitsbehälters angeordnet, das heißt, auf einer dem zu bevorratenden Kraftstoff abgewandten Seite der Halbschale.

Die Barrierefolie 58 ist daher im Bereich einer Innenseite 60 stoffschlüssig mit Trägerwerkstoff 40 verbunden, während auf einer der Seite 60 abgewandten Seite 62 lokal das Anschlusselement 54 angespritzt ist. Wie auch im Beispiel der Fig. 6 weist das Beispiel gemäß Fig. 7 einen Kragen bzw. eine Auftulpung 64 auf, im Bereich derer die Barrierefolie 58 und die Barrierehülse 56 überlappend angeordnet und stoffschlüssig miteinander verbunden sind.

Fig. 8 zeigt eine weitere Alternative eines Anschlusselements 65, bei dem eine Barrierehülse 66 und auch eine Barrierefolie 68 jeweils außenliegend, das heißt im Bereich einer einem Vorratsvolumen eines Flüssigkeitsbehälters abgewandten Außenseite einer Halbschale des Flüssigkeitsbehälters angeordnet sind.

Die Barrierehülse 66 ist vorliegend bereits vor dem Spritzguss des Trägermaterials 40 an die entstehende Kontur des Anschlusselements 65 angepasst worden und weist auch bereits vor dem Spritzguss eine Auftulpung 70 auf, im Bereich derer die Barrierehülse 66 durch den Spritzgussvorgang des zunächst plastifizierten Trägermaterials 40 mit der Barrierefolie 68 stoffschlüssig verbunden wird. Die Barrierehülse 66 und/oder die Barrierefolie 68 können als Monolayer oder mehrschichtig ausgeführt werden.

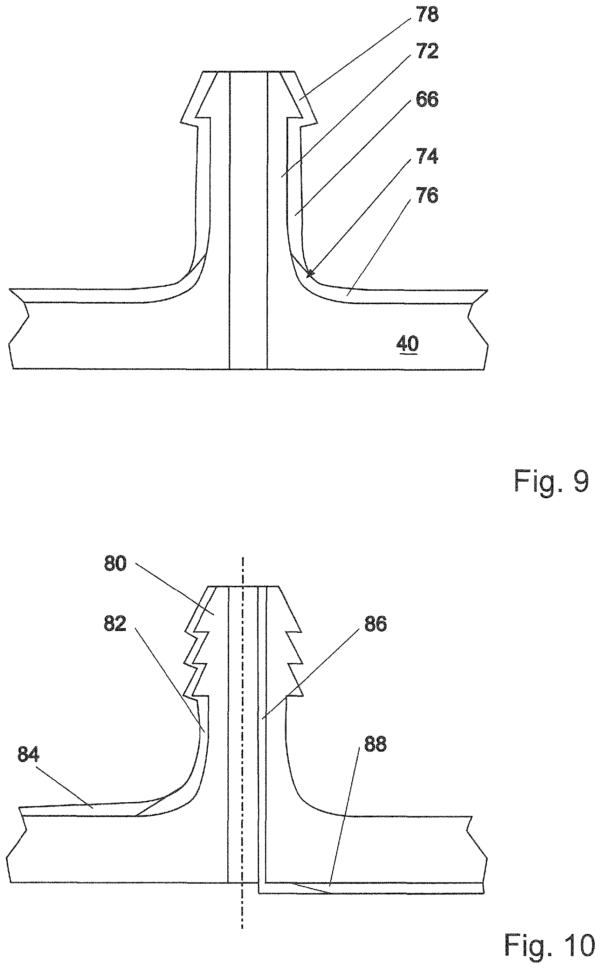

Fig. 9 zeigt eine weitere Variante eines Anschlusselements 72, wobei in diesem Fall eine Auftulpung 74 an einer Barrierefolie 76 vorgesehen ist. Die Barrierefolie 76 ist demnach bereits vor dem Hinterspritzen mit dem Trägerwerkstoff 40 gelocht und weist die Auftulpung 74 auf, um vor dem Spritzgussvorgang eine Überlappung zu einer in einem Spritzgusswerkzeug vorgesehenen Hülse 78 auszubilden.

Je nach anzubindendem Schlauch, Rohr oder Kabel, können Anschlusselemente verschiedenartige Profile aufweisen, wie nachstehend mit Bezug zu den Figuren 10-14 weiter verdeutlicht wird. Hierbei wird in den Figuren 10-14 jeweils linksseitig der gestrichelten Linie eine Variante gezeigt, in der Barriereschicht und Barrierehülse außenliegend angeordnet sind, während jeweils rechts der gestrichelten Linie eine Variante für das gezeigte Profil des Anschlusselements mit innenliegender Barrierefolie und Barrierehülse dargestellt ist.

Fig. 10 zeigt ein Anschlusselement 80 mit einem Tannenbaumprofil. Wie auf der linken Seite exemplarisch dargestellt, können eine Barrierehülse 82 und eine Barrierefolie 84 außenliegend angeordnet sein. Die Barrierehülse ist vorliegend bereits vor dem Spritzguss an das Tannenbaumprofil angepasst worden. Gemäß alternativer Ausführungsbeispiele kann jedoch vorgesehen sein, dass eine im Wesentlichen kreiszylindrische Barrierehülse bereitgestellt wird, die ausschließlich durch den Spritzgussvorgang zu dem Tannenbaumprofil geformt wird. Alternativ können eine Barrierehülse 86 und eine Barrierefolie 88 innenliegend angeordnet sein, wie im rechten Bildteil dargestellt.

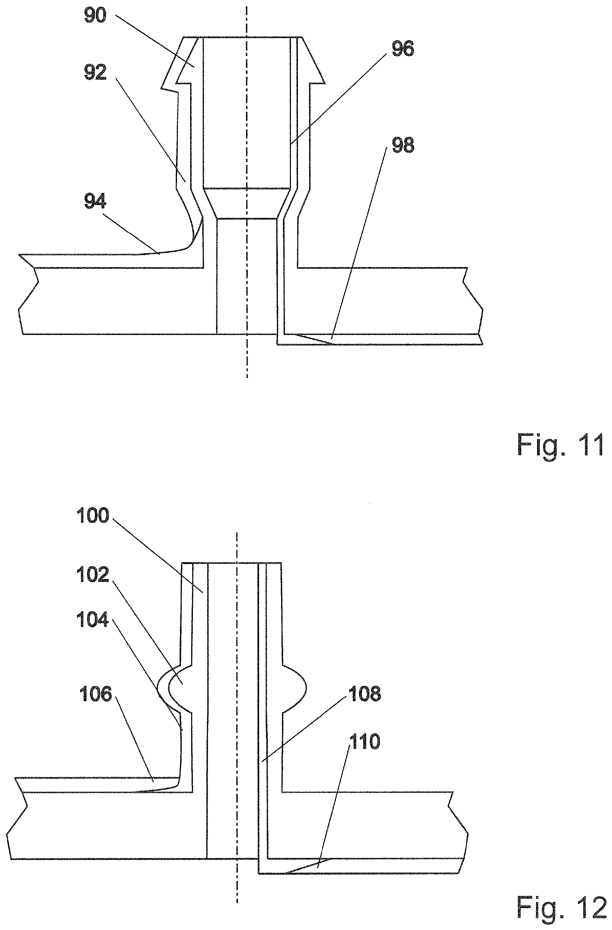

Fig. 11 zeigt eine weitere Variante eines Anschlusselements 90, mit linksseitig dargestellter, außenliegender Barrierehülse 92 und außenliegender Barrierefolie 94. Auf der rechten Bildseite ist wiederum das Anschlusselement 90 mit innenliegender Barrierehülse 96 und innenliegender Barrierefolie 98 dargestellt.

Gemäß Fig. 12 weist ein Anschlusselement 100 eine Auswölbung 102 auf, die außenliegend von einer Barrierehülse 104 umschlossen ist, zusammen mit einer außenliegenden Barrierefolie 106. Alternativ kann das Anschlusselement 100 in Kombination mit einer innenliegenden Barrierehülse 108 und einer innenliegenden Barrierefolie 110 verwendet werden.

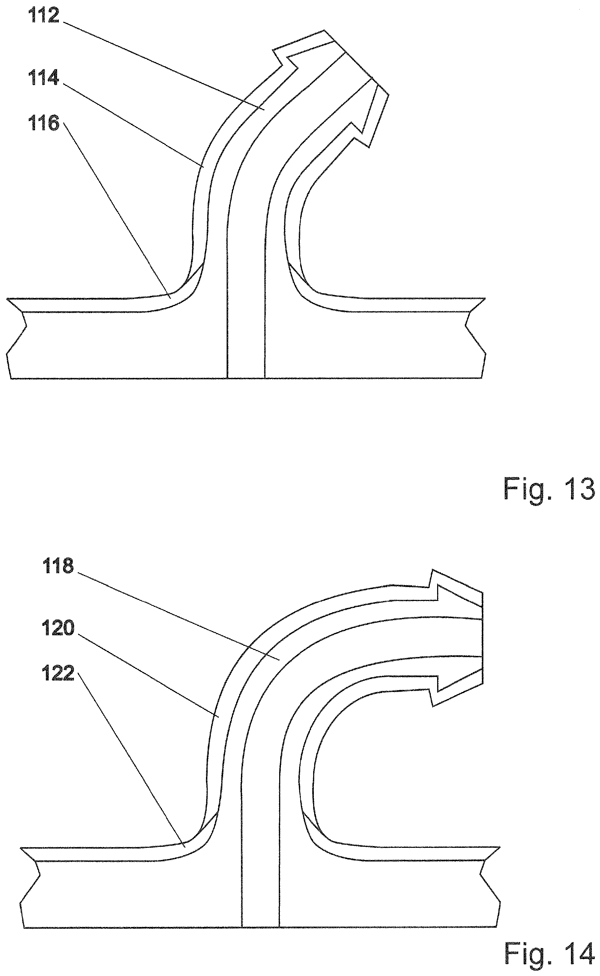

Fig. 13 zeigt ein Anschlusselement 112, das als 45°-Anschluss ausgeführt ist, mit einer Barrierehülse 114 und einer Barrierefolie 116.

Fig. 14 zeigt ein Anschlusselement 118, das als 90°-Anschluss ausgeführt ist, mit einer Barrierehülse 120 und einer Barrierefolie 122.

Es versteht sich, dass bei allen zuvor diskutierten Varianten ein- oder mehrschichtige Barrierehülsen und ein- oder mehrschichtige Barrierefolien eingesetzt werden können.

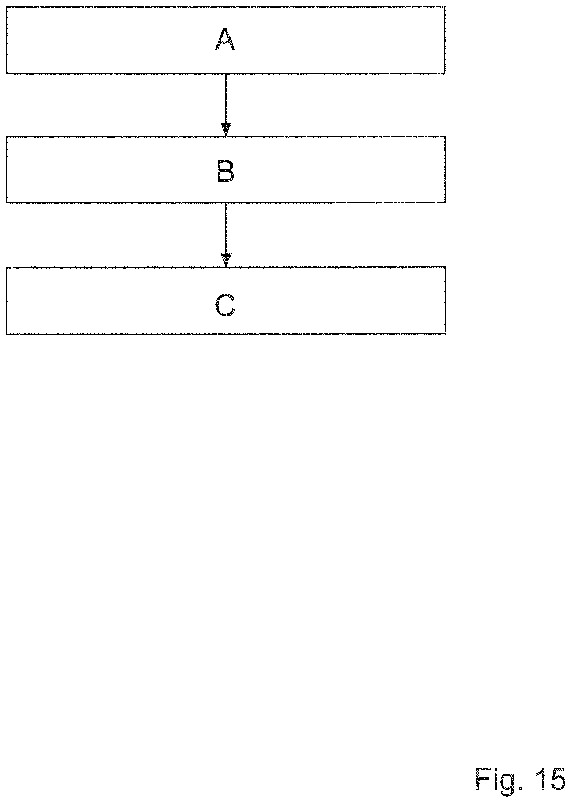

Anhand Fig. 15 wird exemplarisch der Ablauf eines erfindungsgemäßen Spritzgussverfahrens beschrieben. Bei einem erfindungsgemäßen Spritzgussverfahren zum Herstellen einer Halbschale eines Flüssigkeitsbehälters für ein Kraftfahrzeug erfolgen die folgenden Verfahrensschritte:
A Bereitstellen einer Barrierefolie in einer Kavität eines Spritzgusswerkzeugs, wobei die Kavität zur Formgebung der Halbschale vorgesehen ist;
B Bereitstellen einer Barrierehülse in der Kavität;
C Einspritzen von plastifiziertem Spritzgusswerkstoff in die Kavität,
   - wobei plastifizierter Spritzgusswerkstoff auf die Barrierefolie aufgespritzt wird und/oder die Barrierefolie mit plastifiziertem Spritzgusswerkstoff hinterspritzt wird; und
   - wobei die Barrierehülse unter Ausbildung eines Anschlusselements der Halbschale, insbesondere eines Stutzens, mit plastifiziertem Spritzgusswerkstoff hinterspritzt wird und/oder mit plastifiziertem Spritzgusswerkstoff umspritzt wird.

### Bezugszeichen

1 Anschlusselement
2 Anschlusselement
3 Flüssigkeitsbehälter
4 Flüssigkeitsbehälter
5 Wandung
6 Halbschale
7 Barriereschicht
8 Halbschale
9 Trägerschicht
10 Vorratsvolumen
11 Schlauch
12 Kraftstoff
13 Permeationspfad
14 Barrierefolie
16 Barrierefolie
18 Schlauch
20 Barrierehülse
22 Permeationspfad
24 Durchgangsöffnung
26 Außenfläche
28 Innenfläche
30 Durchgangsöffnung
32 Barriereschicht
34 Deckschicht
36 Barriereschicht
38 Deckschicht
40 Spritzgusswerkstoff, Trägerwerkstoff
41 Trägerschicht
42 Bereich
44 Barrierehülse
46 Barrierefolie
48 Bereich
50 Kragen
52 Anschlusselement
54 Anschlusselement
56 Barrierehülse
58 Barrierefolie
60 Seite
62 Seite
64 Auftulpung
65 Anschlusselement
66 Barrierehülse
68 Barrierefolie
70 Auftulpung
72 Anschlusselement
74 Auftulpung
76 Barrierefolie
80 Anschlusselement
82 Barrierehülse
84 Barrierefolie
86 Barrierehülse
88 Barrierefolie
90 Anschlusselement
92 Barrierehülse
94 Barrierefolie
96 Barrierehülse
98 Barrierefolie
100 Anschlusselement
102 Auswölbung
104 Barrierehülse
106 Barrierefolie
108 Barrierehülse
110 Barrierefolie
112 Anschlusselement
114 Barrierehülse
116 Barrierefolie
118 Anschlusselement
120 Barrierehülse
122 Barrierefolie
A Verfahrensschritt
B Verfahrensschritt
C Verfahrensschritt
L Längsachse
L1 Länge
U Umgebung
d1 Wanddicke
d2 Wanddicke

## Patentansprüche

1. Spritzgussverfahren zum Herstellen einer Halbschale eines Flüssigkeitsbehälters für ein Kraftfahrzeug, mit den Verfahrensschritten:
- Bereitstellen einer Barrierefolie (14, 16, 46, 58, 68, 76, 84, 88, 94, 98, 106, 110, 116, 122) in einer Kavität eines Spritzgusswerkzeugs, wobei die Kavität zur Formgebung der Halbschale (6) vorgesehen ist;
**gekennzeichnet durch** das
- Bereitstellen einer Barrierehülse (20, 44, 56, 66, 82, 86, 92, 96, 104, 108, 114, 120) in der Kavität; und das
- Einspritzen von plastifiziertem Spritzgusswerkstoff (40) in die Kavität,
- wobei plastifizierter Spritzgusswerkstoff (40) auf die Barrierefolie (14, 16, 46, 58, 68, 76, 84, 88, 94, 98, 106, 110, 116, 122) aufgespritzt wird und/oder die Barrierefolie (14, 16, 46, 58, 68, 76, 84, 88, 94, 98, 106, 110, 116, 122) mit plastifiziertem Spritzgusswerkstoff (40) hinterspritzt wird;
- wobei die Barrierehülse (20, 44, 56, 66, 82, 86, 92, 96, 104, 108, 114, 120) unter Ausbildung eines Anschlusselements (2, 52, 54, 65, 72, 80, 90, 100, 112, 118) der Halbschale (6), insbesondere eines Stutzens, mit plastifiziertem Spritzgusswerkstoff (40) hinterspritzt wird und/oder mit plastifiziertem Spritzgusswerkstoff (40) umspritzt wird.

2. Spritzgussverfahren nach Anspruch 1,
**gekennzeichnet durch** das Bereitstellen einer Barrierehülse (20, 44, 56, 66, 82, 86, 92, 96, 104, 108, 114, 120) in der Kavität, mit den Verfahrensschritten:
- Einsetzen der Barrierehülse (20, 44, 56, 66, 82, 86, 92, 96, 104, 108, 114, 120) in eine Ausnehmung zur Formgebung des Anschlusselements;
und/oder
- Aufschieben der Barrierehülse (20, 44, 56, 66, 82, 86, 92, 96, 104, 108, 114, 120) auf einen Dorn des Spitzgusswerkzeugs.

3. Spritzgussverfahren nach Anspruch 1 oder 2,
**gekennzeichnet durch** das Bereitstellen der Barrierefolie und der Barrierehülse derart,
- dass eine Längsachse einer Durchgangsöffnung (24) der Barrierehülse (20, 44, 56, 66, 82, 86, 92, 96, 104, 108, 114, 120) quer zu einer Außenfläche (26) oder Innenfläche (28) der Barrierefolie (14, 16, 46, 58, 68, 76, 84, 88, 94, 98, 106, 110, 116, 122) orientiert ist
und/oder
- dass die Barrierefolie (14, 16, 46, 58, 68, 76, 84, 88, 94, 98, 106, 110, 116, 122) an der Barrierehülse (20, 44, 56, 66, 82, 86, 92, 96, 104, 108, 114, 120) anliegt.

4. Spritzgussverfahren nach einem der Ansprüche 1 bis 3, **gekennzeichnet durch** das Bereitstellen der Barrierefolie und der Barrierehülse derart,
- dass eine Durchgangsöffnung der Barrierefolie (14, 16, 46, 58, 68, 76, 84, 88, 94, 98, 106, 110, 116, 122) zumindest abschnittweise fluchtend mit einer Durchgangsöffnung der Barrierehülse
und/oder
- dass eine Durchgangsöffnung (30) der Barrierefolie (14, 16, 46, 58, 68, 76, 84, 88, 94, 98, 106, 110, 116, 122) und eine Durchgangsöffnung (24) der Barrierehülse (20, 44, 56, 66, 82, 86, 92, 96, 104, 108, 114, 120) koaxial angeordnet sind.

5. Spritzgussverfahren nach einem der Ansprüche 1 bis 4, **gekennzeichnet durch** das Bereitstellen der Barrierefolie und der Barrierehülse derart,
- dass die Barrierehülse (20, 44, 56, 66, 82, 86, 92, 96, 104, 108, 114, 120) zumindest abschnittweise in einer Durchgangsöffnung (30) der Barrierefolie (14, 16, 46, 58, 68, 76, 84, 88, 94, 98, 106, 110, 116, 122) sitzt.

6. Spritzgussverfahren nach einem der Ansprüche 1 bis 5, **gekennzeichnet durch**:
- stoffschlüssiges Verbinden der Barrierehülse (20, 44, 56, 66, 82, 86, 92, 96, 104, 108, 114, 120) und der Barrierefolie (14, 16, 46, 58, 68, 76, 84, 88, 94, 98, 106, 110, 116, 122);
und/oder
- stoffschlüssiges Verbinden des Spritzgusswerkstoffs (40) mit der Barrierehülse (20, 44, 56, 66, 82, 86, 92, 96, 104, 108, 114, 120) und/oder der Barrierefolie (14, 16, 46, 58, 68, 76, 84, 88, 94, 98, 106, 110, 116, 122).

7. Flüssigkeitsbehälter für ein Kraftfahrzeug,
- mit zwei miteinander verbundenen Halbschalen (6, 8), die ein Vorratsvolumen (10) zur Aufnahme einer Flüssigkeit begrenzen,
- wobei wenigstens eine der Halbschalen (6, 8) eine Barrierefolie (14, 16, 46, 58, 68, 76, 84, 88, 94, 98, 106, 110, 116, 122) als Diffusionsbarriere hat und ein Anschlusselement (2, 52, 54, 65, 72, 80, 90, 100, 112, 118), insbesondere einen Stutzen, zum Anschließen eines Schlauchs oder Rohrs aufweist,
- wobei dem Anschlusselement (2, 52, 54, 65, 72, 80, 90, 100, 112, 118) wenigstens eine Barrierehülse (20, 44, 56, 66, 82, 86, 92, 96, 104, 108, 114, 120) zugeordnet ist, die eine Diffusionsbarriere im Bereich des Anschlusselements (2, 52, 54, 65, 72, 80, 90, 100, 112, 118) bildet; **dadurch gekennzeichnet, dass** die Barrierehülse (20, 44, 56, 66, 82, 86, 92, 96, 104, 108, 114, 120) zumindest abschnittweise in einer Durchgangsöffnung (30) der Barrierefolie (14, 16, 46, 58, 68, 76, 84, 88, 94, 98, 106, 110, 116, 122) sitzt.

8. Flüssigkeitsbehälter nach Anspruch 7,
**dadurch gekennzeichnet, dass**
- eine Längsachse einer Durchgangsöffnung der Barrierehülse (20, 44, 56, 66, 82, 86, 92, 96, 104, 108, 114, 120) quer zu einer Außenfläche (26) oder Innenfläche (28) der Barrierefolie (14, 16, 46, 58, 68, 76, 84, 88, 94, 98, 106, 110, 116, 122) orientiert ist.

9. Flüssigkeitsbehälter nach Anspruch 7 oder 8,
**dadurch gekennzeichnet, dass**
- eine Durchgangsöffnung (30) der Barrierefolie (14, 16, 46, 58, 68, 76, 84, 88, 94, 98, 106, 110, 116, 122) zumindest abschnittweise fluchtend mit einer Durchgangsöffnung (24) der Barrierehülse (20, 44, 56, 66, 82, 86, 92, 96, 104, 108, 114, 120) angeordnet ist
und/oder
- eine Durchgangsöffnung (30) der Barrierefolie (14, 16, 46, 58, 68, 76, 84, 88, 94, 98, 106, 110, 116, 122) und eine Durchgangsöffnung (24) der Barrierehülse (20, 44, 56, 66, 82, 86, 92, 96, 104, 108, 114, 120) koaxial angeordnet sind .

10. Flüssigkeitsbehälter nach einem der Ansprüche 7 bis 9, **dadurch gekennzeichnet, dass**
- die Barrierefolie (14, 16, 46, 58, 68, 76, 84, 88, 94, 98, 106, 110, 116, 122) und/oder die Barrierehülse (20, 44, 56, 66, 82, 86, 92, 96, 104, 108, 114, 120) ein Monolayer ist
oder
- die Barrierefolie (14, 16, 46, 58, 68, 76, 84, 88, 94, 98, 106, 110, 116, 122) und/oder die Barrierehülse (20, 44, 56, 66, 82, 86, 92, 96, 104, 108, 114, 120) mehrschichtig ist
- und/oder
die Barrierefolie (14, 16, 46, 58, 68, 76, 84, 88, 94, 98, 106, 110, 116, 122) gelocht ist.

11. Flüssigkeitsbehälter nach einem der Ansprüche 7 bis 10, **dadurch gekennzeichnet, dass**
- eine Durchgangsöffnung des Anschlusselements (2, 52, 54, 65, 72, 80, 90, 100, 112, 118) einen gekrümmten Verlauf aufweist oder einen Knick hat, wobei das Anschlusselement (2, 52, 54, 65, 72, 80, 90, 100, 112, 118) insbesondere ein 45°-Anschluss, einen 60°-Anschluss oder einen 90°-Anschluss bildet.

12. Flüssigkeitsbehälter nach einem der Ansprüche 7 bis 11, **dadurch gekennzeichnet, dass**
- die Barrierefolie (14, 16, 46, 58, 68, 76, 84, 88, 94, 98, 106, 110, 116, 122) und die Barrierehülse (20, 44, 56, 66, 82, 86, 92, 96, 104, 108, 114, 120) zumindest abschnittsweise überlappend angeordnet sind, wobei insbesondere die Barrierehülse (20, 44, 56, 66, 82, 86, 92, 96, 104, 108, 114, 120) und/oder die Barrierefolie (14, 16, 46, 58, 68, 76, 84, 88, 94, 98, 106, 110, 116, 122) eine Auftulpung (64, 70, 74) aufweisen oder zumindest abschnittweise trichterförmig sind.

13. Flüssigkeitsbehälter nach einem der Ansprüche 7 bis 12, **dadurch gekennzeichnet, dass**
- die Barrierefolie (14, 16, 46, 58, 68, 76, 84, 88, 94, 98, 106, 110, 116, 122) und die Barrierehülse (20, 44, 56, 66, 82, 86, 92, 96, 104, 108, 114, 120) stoffschlüssig miteinander verbunden sind
und/oder
- die Barrierehülse (20, 44, 56, 66, 82, 86, 92, 96, 104, 108, 114, 120) und/oder die Barrierefolie (14, 16, 46, 58, 68, 76, 84, 88, 94, 98, 106, 110, 116, 122) stoffschlüssig mit einem Spritzgusswerkstoff (40) der Halbschale (6) verbunden ist.

14. Flüssigkeitsbehälter nach einem der Ansprüche 7 bis 13, **dadurch gekennzeichnet, dass**
- die Barrierefolie (14, 16, 46, 58, 68, 76, 84, 88, 94, 98, 106, 110, 116, 122) und/oder die Barrierehülse (20, 44, 56, 66, 82, 86, 92, 96, 104, 108, 114, 120) eine Wanddicke in einem Bereich von 100 µm bis 1000 µm haben.

## Claims

1. Injection molding method for producing a half shell of a liquid container for a motor vehicle, comprising the steps of:
- providing a barrier film (14, 16, 46, 58, 68, 76, 84, 88, 94, 98, 106, 110, 116, 122) in a cavity of an injection mold, the cavity being provided for shaping the half-shell (6) ;
**characterized by**:
- providing a barrier sleeve (20, 44, 56, 66, 82, 86, 92, 96, 104, 108, 114, 120) in the cavity; and the
- injection of plasticised injection moulding material (40) into the cavity,
- wherein plasticized injection molding material (40) is injected onto the barrier film (14, 16, 46, 58, 68, 76, 84, 88, 94, 98, 106, 110, 116, 122) and/or the barrier film (14, 16, 46, 58, 68, 76, 84, 88, 94, 98, 106, 110, 116, 122) is back-injected with plasticized injection molding material (40);
- wherein the barrier sleeve (20, 44, 56, 66, 82, 86, 92, 96, 104, 108, 114, 120) is back-injected with plasticized injection-molded material (40), forming a connecting element (2, 52, 54, 65, 72, 80, 90, 100, 112, 118) of the half shell (6), in particular a nozzle, and/or is over-molded with plasticized injection-molded material (40).

2. Injection moulding method according to claim 1,
**characterized by** providing a barrier sleeve (20, 44, 56, 66, 82, 86, 92, 96, 104, 108, 114, 120) in the cavity, with the method steps:
- inserting the barrier sleeve (20, 44, 56, 66, 82, 86, 92, 96, 104, 108, 114, 120) into a recess for shaping the connection element;
and/or
- pushing the barrier sleeve (20, 44, 56, 66, 82, 86, 92, 96, 104, 108, 114, 120) onto a mandrel of the injection molding tool.

3. Injection moulding method according to claim 1 or 2, **characterized by** providing the barrier film and the barrier sleeve such that
- that a longitudinal axis of a through opening (24) of the barrier sleeve (20, 44, 56, 66, 82, 86, 92, 96, 104, 108, 114, 120) is oriented transversely to an outer surface (26) or inner surface (28) of the barrier film (14, 16, 46, 58, 68, 76, 84, 88, 94, 98, 106, 110, 116, 122) and/or
- that the barrier film (14, 16, 46, 58, 68, 76, 84, 88, 94, 98, 106, 110, 116, 122) rests against the barrier sleeve (20, 44, 56, 66, 82, 86, 92, 96, 104, 108, 114, 120).

4. The injection molding method according to any one of claims 1 to 3,
**characterized by** providing the barrier film and the barrier sleeve such that
- that a through-opening of the barrier film (14, 16, 46, 58, 68, 76, 84, 88, 94, 98, 106, 110, 116, 122) is at least partially aligned with a through-opening of the barrier sleeve
and/or
- that a through opening (30) of the barrier film (14, 16, 46, 58, 68, 76, 84, 88, 94, 98, 106, 110, 116, 122) and a through opening (24) of the barrier sleeve (20, 44, 56, 66, 82, 86, 92, 96, 104, 108, 114, 120) are arranged coaxially.

5. The injection molding method according to any one of claims 1 to 4,
**characterized by** providing the barrier film and the barrier sleeve such that
- that the barrier sleeve (20, 44, 56, 66, 82, 86, 92, 96, 104, 108, 114, 120) is seated at least in sections in a through opening (30) of the barrier film (14, 16, 46, 58, 68, 76, 84, 88, 94, 98, 106, 110, 116, 122).

6. The injection molding method according to any one of claims 1 to 5,
**characterized by**:
- integrally connecting the barrier sleeve (20, 44, 56, 66, 82, 86, 92, 96, 104, 108, 114, 120) and the barrier film (14, 16, 46, 58, 68, 76, 84, 88, 94, 98, 106, 110, 116, 122);
and/or
- integrally connecting the injection molding material (40) to the barrier sleeve (20, 44, 56, 66, 82, 86, 92, 96, 104, 108, 114, 120) and/or the barrier film (14, 16, 46, 58, 68, 76, 84, 88, 94, 98, 106, 110, 116, 122).

7. Liquid container for a motor vehicle,
- with two interconnected half-shells (6, 8), which delimit a storage volume (10) for receiving a liquid,
- wherein at least one of the half shells (6, 8) has a barrier film (14, 16, 46, 58, 68, 76, 84, 88, 94, 98, 106, 110, 116, 122) as a diffusion barrier and a connecting element (2, 52, 54, 65, 72, 80, 90, 100, 112, 118), in particular a connecting piece, for connecting a hose or pipe,
- wherein the connection element (2, 52, 54, 65, 72, 80, 90, 100, 112, 118) at least one barrier sleeve (20, 44, 56, 66, 82, 86, 92, 96, 104, 108, 114, 120), comprising a diffusion barrier in the region of the connection element (2, 52, 54, 65, 72, 80, 90, 100, 112, 118); **characterized in that** that the barrier sleeve (20, 44, 56, 66, 82, 86, 92, 96, 104, 108, 114, 120) at least in sections in a through-opening (30) of the barrier film (14, 16, 46, 58, 68, 76, 84, 88, 94, 98, 106, 110, 116, 122).

8. Liquid container according to claim 7,
**characterized in that**
- a longitudinal axis of a through opening of the barrier sleeve (20, 44, 56, 66, 82, 86, 92, 96, 104, 108, 114, 120) is oriented transversely to an outer surface (26) or inner surface (28) of the barrier film (14, 16, 46, 58, 68, 76, 84, 88, 94, 98, 106, 110, 116, 122).

9. Liquid container according to claim 7 or 8,
**characterized in that**
- a through opening (30) of the barrier film (14, 16, 46, 58, 68, 76, 84, 88, 94, 98, 106, 110, 116, 122) is arranged at least in sections aligned with a through opening (24) of the barrier sleeve (20, 44, 56, 66, 82, 86, 92, 96, 104, 108, 114, 120)
and/or
- a through opening (30) of the barrier film (14, 16, 46, 58, 68, 76, 84, 88, 94, 98, 106, 110, 116, 122) and a through opening (24) of the barrier sleeve (20, 44, 56, 66, 82, 86, 92, 96, 104, 108, 114, 120) are arranged coaxially .

10. Liquid container according to any one of claims 7 to 9, **characterized in that**
- the barrier film (14, 16, 46, 58, 68, 76, 84, 88, 94, 98, 106, 110, 116, 122) and/or the barrier sleeve (20, 44, 56, 66, 82, 86, 92, 96, 104, 108, 114, 120) is a monolayer or
- the barrier film (14, 16, 46, 58, 68, 76, 84, 88, 94, 98, 106, 110, 116, 122) and/or the barrier sleeve (20, 44, 56, 66, 82, 86, 92, 96, 104, 108, 114, 120) is multilayered
- and/or
the barrier film (14, 16, 46, 58, 68, 76, 84, 88, 94, 98, 106, 110, 116, 122) is perforated.

11. Liquid container according to any one of claims 7 to 10, **characterized in that**
- a through opening of the connection element (2, 52, 54, 65, 72, 80, 90, 100, 112, 118) has a curved profile or has a bend, wherein the connection element (2, 52, 54, 65, 72, 80, 90, 100, 112, 118) forms in particular a 45°connection, a 60°connection or a 90°connection.

12. Liquid container according to any one of claims 7 to 11, **characterized in that**
- the barrier film (14, 16, 46, 58, 68, 76, 84, 88, 94, 98, 106, 110, 116, 122) and the barrier sleeve (20, 44, 56, 66, 82, 86, 92, 96, 104, 108, 114, 120) are arranged overlapping at least in sections, wherein in particular the barrier sleeve (20, 44, 56, 66, 82, 86, 92, 96, 104, 108, 114, 120) and/or the barrier film (14, 16, 46, 58, 68, 76, 84, 88, 94, 98, 106, 110, 116, 122) a bulge (64, 70, 74) or at least in sections are funnel-shaped.

13. Liquid container according to any one of claims 7 to 12, **characterized in that**
- the barrier film (14, 16, 46, 58, 68, 76, 84, 88, 94, 98, 106, 110, 116, 122) and the barrier sleeve (20, 44, 56, 66, 82, 86, 92, 96, 104, 108, 114, 120) are integrally connected to each other
and/or
- the barrier sleeve (20, 44, 56, 66, 82, 86, 92, 96, 104, 108, 114, 120) and/or the barrier film (14, 16, 46, 58, 68, 76, 84, 88, 94, 98, 106, 110, 116, 122) is integrally connected to an injection-molded material (40) of the half shell (6).

14. Liquid container according to any one of claims 7 to 13, **characterized in that**
- the barrier film (14, 16, 46, 58, 68, 76, 84, 88, 94, 98, 106, 110, 116, 122) and/or the barrier sleeve (20, 44, 56, 66, 82, 86, 92, 96, 104, 108, 114, 120) have a wall thickness in a range from 100 µm to 1000 µm.

## Revendications

1. Procédé de moulage par injection pour la fabrication d'une demi-coque d'un réservoir pour liquide pour un véhicule automobile, comportant les étapes de procédé consistant à :
- fournir un film barrière (14, 16, 46, 58, 68, 76, 84, 88, 94, 98, 106, 110, 116, 122) dans une cavité d'un outil de moulage par injection, dans lequel la cavité est prévue pour le formage de la demi-coque (6) ;
**caractérisé par**
- la fourniture d'un manchon barrière (20, 44, 56, 66, 82, 86, 92, 96, 104, 108, 114, 120) dans la cavité ; et
- l'injection de matériau de moulage par injection plastifié (40) dans la cavité,
- dans lequel un matériau de moulage par injection plastifié (40) est pulvérisé sur le film barrière (14, 16, 46, 58, 68, 76, 84, 88, 94, 98, 106, 110, 116, 122) et/ou le film barrière (14, 16, 46, 58, 68, 76, 84, 88, 94, 98, 106, 110, 116, 122) est pulvérisé par l'arrière avec un matériau de moulage par injection plastifié (40) ;
- dans lequel un matériau de moulage par injection plastifié (40) est pulvérisé par l'arrière sur le manchon barrière (20, 44, 56, 66, 82, 86, 92, 96, 104, 108, 114, 120) et/ou un matériau de moulage par injection plastifié (40) enrobe ledit manchon barrière pour former un élément de raccordement (2, 52, 54, 65, 72, 80, 90, 100, 112, 118) de la demi-coque (6), en particulier une tubulure.

2. Procédé de moulage par injection selon la revendication 1,
**caractérisé par** la fourniture d'un manchon barrière (20, 44, 56, 66, 82, 86, 92, 96, 104, 108, 114, 120) dans la cavité, comportant les étapes de procédé consistant à :
- insérer le manchon barrière (20, 44, 56, 66, 82, 86, 92, 96, 104, 108, 114, 120) dans un évidement pour le formage de l'élément de raccordement ;
et/ou
- faire glisser le manchon barrière (20, 44, 56, 66, 82, 86, 92, 96, 104, 108, 114, 120) sur un mandrin de l'outil de moulage par injection.

3. Procédé de moulage par injection selon la revendication 1 ou 2,
**caractérisé par** la fourniture du film barrière et du manchon barrière de telle sorte
- qu'un axe longitudinal d'une ouverture de passage (24) du manchon barrière (20, 44, 56, 66, 82, 86, 92, 96, 104, 108, 114, 120) est orienté transversalement à une surface extérieure (26) ou à une surface intérieure (28) du film barrière (14, 16, 46, 58, 68, 76, 84, 88, 94, 98, 106, 110, 116, 122)
et/ou
- que le film barrière (14, 16, 46, 58, 68, 76, 84, 88, 94, 98, 106, 110, 116, 122) repose contre le manchon barrière (20, 44, 56, 66, 82, 86, 92, 96, 104, 108, 114, 120).

4. Procédé de moulage par injection selon l'une des revendications 1 à 3, **caractérisé par** la fourniture du film barrière et du manchon barrière de telle sorte
- qu'une ouverture de passage du film barrière (14, 16, 46, 58, 68, 76, 84, 88, 94, 98, 106, 110, 116, 122) est en alignement au moins dans certaines sections avec une ouverture de passage du manchon barrière
et/ou
- qu'une ouverture de passage (30) du film barrière (14, 16, 46, 58, 68, 76, 84, 88, 94, 98, 106, 110, 116, 122) et une ouverture de passage (24) du manchon barrière (20, 44, 56, 66, 82, 86, 92, 96, 104, 108, 114, 120) sont disposées de manière coaxiale.

5. Procédé de moulage par injection selon l'une des revendications 1 à 4, **caractérisé par** la fourniture du film barrière et du manchon barrière de telle sorte
- que le manchon barrière (20, 44, 56, 66, 82, 86, 92, 96, 104, 108, 114, 120) est placé au moins dans certaines sections dans une ouverture de passage (30) du film barrière (14, 16, 46, 58, 68, 76, 84, 88, 94, 98, 106, 110, 116, 122).

6. Procédé de moulage par injection selon l'une des revendications 1 à 5, **caractérisé par** :
- la liaison par liaison de matière du manchon barrière (20, 44, 56, 66, 82, 86, 92, 96, 104, 108, 114, 120) et du film barrière (14, 16, 46, 58, 68, 76, 84, 88, 94, 98, 106, 110, 116, 122) ;
et/ou
- la liaison par liaison de matière du matériau de moulage par injection (40) avec le manchon barrière (20, 44, 56, 66, 82, 86, 92, 96, 104, 108, 114, 120) et/ou le film barrière (14, 16, 46, 58, 68, 76, 84, 88, 94, 98, 106, 110, 116, 122).

7. Réservoir pour liquide pour un véhicule automobile,
- comportant deux demi-coques (6, 8) reliées entre elles et délimitant un volume de réserve (10) destiné à recevoir un liquide,
- dans lequel au moins l'une des demi-coques (6, 8) possède un film barrière (14, 16, 46, 58, 68, 76, 84, 88, 94, 98, 106, 110, 116, 122) comme barrière de diffusion et présente un élément de raccordement (2, 52, 54, 65, 72, 80, 90, 100, 112, 118), en particulier une tubulure, pour le raccordement d'un tuyau ou d'un tube,
- dans lequel au moins un manchon barrière (20, 44, 56, 66, 82, 86, 92, 96, 104, 108, 114, 120) est associé à l'élément de raccordement (2, 52, 54, 65, 72, 80, 90, 100, 112, 118), lequel manchon barrière forme une barrière de diffusion dans la zone de l'élément de raccordement (2, 52, 54, 65, 72, 80, 90, 100, 112, 118) ; **caractérisé en ce que** le manchon barrière (20, 44, 56, 66, 82, 86, 92, 96, 104, 108, 114, 120) est placé au moins dans certaines sections dans une ouverture de passage (30) du film barrière (14, 16, 46, 58, 68, 76, 84, 88, 94, 98, 106, 110, 116, 122).

8. Réservoir pour liquide selon la revendication 7,
**caractérisé en ce que**
- un axe longitudinal d'une ouverture de passage du manchon barrière (20, 44, 56, 66, 82, 86, 92, 96, 104, 108, 114, 120) est orienté transversalement à une surface extérieure (26) ou à une surface intérieure (28) du film barrière (14, 16, 46, 58, 68, 76, 84, 88, 94, 98, 106, 110, 116, 122).

9. Réservoir pour liquide selon la revendication 7 ou 8,
**caractérisé en ce que**
- une ouverture de passage (30) du film barrière (14, 16, 46, 58, 68, 76, 84, 88, 94, 98, 106, 110, 116, 122) est disposée en alignement au moins dans certaines sections avec une ouverture de passage (24) du manchon barrière (20, 44, 56, 66, 82, 86, 92, 96, 104, 108, 114, 120)
et/ou
- une ouverture de passage (30) du film barrière (14, 16, 46, 58, 68, 76, 84, 88, 94, 98, 106, 110, 116, 122) et une ouverture de passage (24) du manchon barrière (20, 44, 56, 66, 82, 86, 92, 96, 104, 108, 114, 120) sont disposées de manière coaxiale.

10. Réservoir pour liquide selon l'une des revendications 7 à 9,
**caractérisé en ce que**
- le film barrière (14, 16, 46, 58, 68, 76, 84, 88, 94, 98, 106, 110, 116, 122) et/ou le manchon barrière (20, 44, 56, 66, 82, 86, 92, 96, 104, 108, 114, 120) sont monocouches
ou
- le film barrière (14, 16, 46, 58, 68, 76, 84, 88, 94, 98, 106, 110, 116, 122) et/ou le manchon barrière (20, 44, 56, 66, 82, 86, 92, 96, 104, 108, 114, 120) sont multicouches
- et/ou
le film barrière (14, 16, 46, 58, 68, 76, 84, 88, 94, 98, 106, 110, 116, 122) est perforé.

11. Réservoir pour liquide selon l'une des revendications 7 à 10,
**caractérisé en ce que**
- une ouverture de passage de l'élément de raccordement (2, 52, 54, 65, 72, 80, 90, 100, 112, 118) présente un tracé incurvé ou possède un coude, dans lequel l'élément de raccordement (2, 52, 54, 65, 72, 80, 90, 100, 112, 118) forme en particulier un raccordement à 45°, un raccordement à 60° ou un raccordement à 90°.

12. Réservoir pour liquide selon l'une des revendications 7 à 11,
**caractérisé en ce que**
- le film barrière (14, 16, 46, 58, 68, 76, 84, 88, 94, 98, 106, 110, 116, 122) et le manchon barrière (20, 44, 56, 66, 82, 86, 92, 96, 104, 108, 114, 120) sont disposés en se chevauchant au moins dans certaines sections, dans lequel, en particulier, le manchon barrière (20, 44, 56, 66, 82, 86, 92, 96, 104, 108, 114, 120) et/ou le film barrière (14, 16, 46, 58, 68, 76, 84, 88, 94, 98, 106, 110, 116, 122) présentent un renflement (64, 70, 74) ou sont en forme d'entonnoir au moins dans certaines sections.

13. Réservoir pour liquide selon l'une des revendications 7 à 12,
**caractérisé en ce que**
- le film barrière (14, 16, 46, 58, 68, 76, 84, 88, 94, 98, 106, 110, 116, 122) et le manchon barrière (20, 44, 56, 66, 82, 86, 92, 96, 104, 108, 114, 120) sont reliés entre eux par liaison de matière
et/ou
- le film barrière (20, 44, 56, 66, 82, 86, 92, 96, 104, 108, 114, 120) et/ou le film barrière (14, 16, 46, 58, 68, 76, 84, 88, 94, 98, 106, 110, 116, 122) sont reliés par liaison de matière à un matériau de moulage par injection (40) de la demi-coque (6).

14. Réservoir pour liquide selon l'une des revendications 7 à 13, **caractérisé en ce que**
- le film barrière (14, 16, 46, 58, 68, 76, 84, 88, 94, 98, 106, 110, 116, 122) et/ou le manchon barrière (20, 44, 56, 66, 82, 86, 92, 96, 104, 108, 114, 120) possèdent une épaisseur de paroi comprise dans une plage allant de 100 µm à 1000 µm.
